(19) Europäisches Patentamt / European Patent Office / Office européen des brevets

(11) **EP 3 857 810 B1**

(12) **FASCICULE DE BREVET EUROPEEN**

(45) Date de publication et mention de la délivrance du brevet:
**12.06.2024  Bulletin 2024/24**

(21) Numéro de dépôt: **19790682.9**

(22) Date de dépôt: **20.09.2019**

(51) Classification Internationale des Brevets (IPC):
**H04L 9/00** *(2022.01)*

(52) Classification Coopérative des Brevets (CPC):
**H04L 9/00;** H04L 9/302; H04L 2209/046;
H04L 2209/46

(86) Numéro de dépôt international:
**PCT/FR2019/052213**

(87) Numéro de publication internationale:
**WO 2020/065185 (02.04.2020 Gazette 2020/14)**

(54) **PROCÉDÉ CRYPTOGRAPHIQUE DE COMPARAISON SÉCURISÉE DE DEUX DONNÉES SECRÈTES X ET Y**

KRYPTOGRAFISCHES VERFAHREN ZUM SICHEREN VERGLEICH ZWEIER GEHEIMER DATEN X UND Y

CRYPTOGRAPHIC METHOD OF SECURE COMPARISON OF TWO SECRET DATA X AND Y

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **24.09.2018  FR 1858677**

(43) Date de publication de la demande:
**04.08.2021  Bulletin 2021/31**

(73) Titulaire: **Orange**
**92130 Issy-les-Moulineaux (FR)**

(72) Inventeurs:
• **BOURSE, Florian**
**92326 CHÂTILLON CEDEX (FR)**
• **SANDERS, Olivier**
**92326 CHÂTILLON CEDEX (FR)**
• **TRAORE, Jacques**
**92326 CHÂTILLON CEDEX (FR)**

(74) Mandataire: **Cabinet Beau de Loménie**
**158, rue de l'Université**
**75340 Paris Cedex 07 (FR)**

(56) Documents cités:
• **CARLTON RHYS ET AL: "Threshold Properties of Prime Power Subgroups with Application to Secure Integer Comparisons", 7 mars 2018 (2018-03-07), INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 137 - 156, XP047471610, ISBN: 978-3-642-17318-9 [extrait le 2018-03-07] cité dans la demande section 5**
• **GEOFFROY COUTEAU: "Efficient Secure Comparison Protocols", INTERNATIONAL ASSOCIATION FOR CRYPTOLOGIC RESEARCH,, vol. 20160601:071706, 31 mai 2016 (2016-05-31), pages 1-34, XP061021038,**

**Description**

Arrière-plan de l'invention

L'invention se rapporte au domaine général des télécommunications et plus particulièrement de la cryptographie.

Elle concerne un procédé cryptographique de comparaison sécurisée de deux données détenues respectivement par deux entités distinctes et maintenues secrètes par celles-ci. Autrement dit, aucune des entités n'est en possession des deux données pour procéder directement à leur comparaison, par exemple bit à bit.

L'invention s'applique à de nombreux domaines, tels que par exemple la santé ou la cybersécurité, qui font appel de plus en plus à des algorithmes d'apprentissage automatique (ou « machine learning » en anglais) utilisant des techniques de classification permettant d'automatiser le traitement des données. L'une des tâches les plus importantes devant être réalisée lors de la classification de données est la comparaison des données. Or, il arrive que les données à comparer soient des données sensibles, telles que par exemple des données bancaires ou de santé récupérées auprès de clients, que ces derniers peuvent ne pas souhaiter rendre publiques, ce qui rend difficiles leur comparaison directe.

La cryptographie permet de concilier efficacement ces intérêts divergents grâce à des techniques de calcul multi-parties sécurisé offrant la possibilité de comparer deux entiers entre eux. De manière générale, ces techniques considèrent deux entités distinctes A et B, détenant respectivement des données secrètes x et y se présentant sous la forme de nombres entiers, et cherchant à évaluer une certaine fonction de x et de y sans révéler ces données pour comparer ces données. Ce problème, complexe à résoudre, est connu sous le nom de « problème des millionnaires » : deux millionnaires Alice et Bob disposent chacun respectivement d'une somme x et d'une somme y, et cherchent à savoir lequel d'entre eux est le plus riche sans dévoiler à l'autre la somme dont ils disposent.

Différents algorithmes cryptographiques ont été proposés pour résoudre ce problème.

Une première catégorie d'algorithmes s'appuie sur des circuits dits brouillés ou « garbled circuits ». L'approche retenue consiste à décomposer les deux données secrètes x et y selon une représentation binaire et à comparer de manière sécurisée ces représentations au moyen d'un circuit booléen. Ces algorithmes souffrent d'une complexité importante, notamment en termes d'interactions requises.

Une deuxième catégorie d'algorithmes, moins complexes à mettre en oeuvre, s'appuie sur des techniques de chiffrement homomorphe. Un exemple d'un tel algorithme est décrit dans le document de Carlton et al. intitulé « Threshold Properties of Prime Power Subgroups with Application to Secure Integer Comparisons », CT-RSA 2018, pages 137-156, March 2018. Cet algorithme repose sur quatre passes entre les entités A et B conduisant à l'échange entre les deux entités de différents résultats de calculs utilisant deux algorithmes de chiffrement homomorphe distincts, et permettant à l'une d'elle, via un ultime test d'égalité, de déterminer laquelle des deux données secrètes x ou y est supérieure à l'autre. L'avantage de cet algorithme est qu'il ne nécessite pas de comparer bit à bit les données secrètes x et y contrairement aux algorithmes utilisant des circuits brouillés. Il reste toutefois assez complexe, requérant quatre passes entre les entités A et B, l'utilisation de deux algorithmes de chiffrement homomorphe différents, et de coûteux calculs de logarithmes discrets.

Objet et résumé de l'invention

L'invention propose un procédé de comparaison sécurisée de deux données secrètes entières entre deux entités moins complexe que les schémas précités de l'état de la technique.

Plus particulièrement, elle concerne un procédé cryptographique de comparaison sécurisée de deux données secrètes entières x et y détenues respectivement par un premier dispositif de calcul et par un deuxième dispositif de calcul, ce procédé comprenant :

- une étape de génération, par le premier dispositif de calcul, d'un module RSA (Rivest Shamir Adleman) noté N ;
- une étape de calcul, par le premier dispositif de calcul, d'un nombre C égal à $g^{b^{ax}}h1$ où g est un élément d'un sous-groupe G de $\mathbb{Z}_N$ d'ordre $b^d$, $h1$ est un élément d'un sous-groupe H de $\mathbb{Z}_N$ d'ordre f, et a, b, d, et f désignent des entiers tels que b et f sont premiers entre eux et les données x et y sont inférieures à d/a ;
- une étape d'envoi par le premier dispositif de calcul du nombre C au deuxième dispositif de calcul ;
- une étape de calcul par le deuxième dispositif de calcul d'au moins :

  ∘ un nombre D égal à $C^{u.b^{d-ay}}(gh3)^v h2$ où u et v désignent deux entiers aléatoires, et $h2$ et $h3$ des éléments du sous-groupe H ; et
  ∘ d'une première empreinte de $(gh3)^v$ calculée en utilisant une fonction de hachage ;

- une étape d'envoi par le deuxième dispositif de calcul au premier dispositif de calcul du nombre D et de la première empreinte ;
- une étape de calcul par le premier dispositif de calcul du nombre $(D^f)^{f'}$ où $f'$ est l'inverse de $f$ modulo $b^d$ ;
- une étape d'obtention par le premier dispositif de calcul, à partir du nombre $(D^f)^{f'}$ calculé, d'une deuxième empreinte en utilisant la fonction de hachage ; et
- une étape de détermination, par le premier dispositif de calcul, que x est supérieure ou égale à y ou que x est inférieure à y en fonction du résultat d'une comparaison entre la première empreinte et la deuxième empreinte.

De façon connue, un module RSA est un nombre entier N produit de deux nombres entiers premiers p et q.

L'invention s'appuie donc sur un ensemble d'étapes mises en oeuvre par le premier dispositif de calcul et le deuxième dispositif de calcul.

Elle vise ainsi également un procédé de détermination, destiné à être mis en oeuvre par un premier dispositif de calcul, détenant et maintenant secrète une donnée entière x, ce procédé de détermination comprenant :

- une étape de génération d'un module RSA noté N ;
- une étape de calcul d'un nombre C égal à $g^{bax}h1$ où $g$ est un élément d'un sous-groupe G de $\mathbb{Z}^N$ d'ordre $b^d$, $h1$ est un élément d'un sous-groupe H de $\mathbb{Z}_N$ d'ordre $f$, et $a, b, d,$ et $f$ désignent des entiers tels que $b$ et $f$ sont premiers entre eux, et la donnée x est inférieure $d/a$ ;
- une étape d'envoi du nombre C à un deuxième dispositif de calcul détenant et maintenant secrète une donnée entière y, la donnée y étant inférieure $d/a$ ;
- une étape de réception en provenance du deuxième dispositif de calcul d'au moins :

  ∘ un nombre D égal à $C^{u.b^{d-ay}}(gh3)^vh2$ où u et v désignent deux entiers aléatoires, et h2 et h3 des éléments du sous-groupe H ; et
  ∘ d'une première empreinte de $(gh3)^v$ calculée en utilisant une fonction de hachage ;

- une étape de calcul par le premier dispositif de calcul du nombre $(D^f)^{f'}$ où $f'$ est l'inverse de $f$ modulo $b^d$ ;
- une étape d'obtention par le premier dispositif de calcul, à partir du nombre $(D^f)^{f'}$ calculé, d'une deuxième empreinte en utilisant la fonction de hachage ; et
- une étape de détermination, par le premier dispositif de calcul, que x est supérieure ou égale à y ou que x est inférieure à y en fonction du résultat d'une comparaison entre la première empreinte et la deuxième empreinte.

Corrélativement, l'invention vise aussi un dispositif de calcul, dit premier dispositif de calcul, détenant et maintenant secrète une donnée entière x, ce premier dispositif de calcul comprenant :

- un module de génération, configuré pour générer un module RSA noté N ;
- un premier module de calcul, configuré pour calculer un nombre C égal à $g^{bax}h1$ où $g$ est un élément d'un sous-groupe G de $\mathbb{Z}_N$ d'ordre $b^d$, $h1$ est un élément d'un sous-groupe H de $\mathbb{Z}_N$ d'ordre $f$, et $a, b, d,$ et $f$ désignent des entiers tels que $b$ et $f$ sont premiers entre eux et la donnée x est inférieure $d/a$ ;
- un module d'envoi, configuré pour envoyer le nombre C à un deuxième dispositif de calcul détenant et maintenant secrète une donnée entière y, la donnée y étant inférieure $d/a$ ;
- un module de réception, apte à recevoir du deuxième dispositif de calcul au moins :

  ∘ un nombre D égal à $C^{u.b^{d-ay}}(gh3)^vh2$ où u et v désignent deux entiers aléatoires, et h2 et h3 des éléments du sous-groupe H ; et
  ∘ une première empreinte de $(gh3)^v$ calculée en utilisant une fonction de hachage ;

- un deuxième module de calcul, configuré pour calculer un nombre $(D^f)^{f'}$ où $f'$ est l'inverse de f modulo $b^d$ ;
- un module d'obtention, configuré pour obtenir à partir du nombre $(D^f)^{f'}$ calculé une deuxième empreinte en utilisant la fonction de hachage ; et
- un module de détermination, configuré pour déterminer que x est supérieure ou égale à y ou que x est inférieure à y en fonction du résultat d'une comparaison entre la première empreinte et la deuxième empreinte.

L'invention concerne également un procédé de calcul, destiné à être mis en oeuvre par un dispositif de calcul dit deuxième dispositif de calcul, détenant et maintenant secrète une donnée entière y, ce procédé de calcul comprenant :

- une étape de réception en provenance d'un premier dispositif de calcul détenant et maintenant secrète une donnée entière x, d'un nombre C égal à $g^{bax}\,h1$ où $g$ est un élément d'un sous-groupe G de $\mathbb{Z}_N$ d'ordre $b^d$, $h1$ est un élément d'un sous-groupe H de $\mathbb{Z}_N$ d'ordre $f$, et $a$, $b$, $d$, et f désignent des entiers tels que b et f sont premiers entre eux et les données x et y sont inférieures à $d/a$ ;
- une étape de calcul d'au moins :

  ◦ un nombre D égal à $C^{u.b^{d-ay}}(gh3)^v h2$ où u et v désignent deux entiers aléatoires, et $h2$ et $h3$ des éléments du sous-groupe H ; et
  ◦ d'une empreinte de $(gh3)$"calculée en utilisant une fonction de hachage ;

- une étape d'envoi au premier dispositif de calcul du nombre D et de l'empreinte calculée, pour permettre au premier dispositif de calcul de déterminer sans connaître y si x est supérieure ou égale ou inférieure à y.

Corrélativement, l'invention vise également un dispositif de calcul, dit deuxième dispositif de calcul, détenant et maintenant secrète une donnée entière y, ce deuxième dispositif de calcul comprenant :

- un module de réception, apte à recevoir d'un premier dispositif de calcul détenant et maintenant secrète une donnée entière x, un nombre C égal à $g^{bax}h1$ où $g$ est un élément d'un sous-groupe G de $\mathbb{Z}_N$ d'ordre $b^d$, $h1$ est un élément d'un sous-groupe H de $\mathbb{Z}_N$ d'ordre $f$, et $a$, $b$, $d$, et f désignent des entiers tels que $b$ et f sont premiers entre eux et les données x et y sont inférieures à $d/a$ ;
- un module de calcul, configuré pour calculer au moins :

  ◦ un nombre D égal à $C^{u.b^{d-ay}}(gh3)^v h2$ où u et v désignent deux entiers aléatoires, et $h2$ et $h3$ des éléments du sous-groupe H ; et
  ◦ une empreinte de $(gh3)^v$ calculée en utilisant une fonction de hachage ;

- un module d'envoi, configuré pour envoyer au premier dispositif de calcul le nombre D et l'empreinte calculée, pour permettre au premier dispositif de calcul de déterminer sans connaître y si x est supérieure ou égale ou inférieure à y.

L'invention concerne encore un système cryptographique apte à comparer deux données secrètes x et y et comprenant :

- un premier dispositif de calcul selon l'invention, détenant et maintenant la donnée x secrète ; et
- un deuxième dispositif de calcul selon l'invention, détenant et maintenant la donnée y secrète.

Optionnellement, en fonction notamment de la valeur de l'élément $h3$ et/ou de la nature secrète ou publique de l'élément g, le deuxième dispositif de calcul peut en outre calculer un nombre D1 qu'il envoie au premier dispositif de calcul et qui est utilisé par celui-ci pour obtenir la deuxième empreinte.

L'invention propose donc un nouveau crypto-système permettant à deux entités (dispositifs de calcul au sens de l'invention) de comparer deux données x et y sans les révéler, qui s'appuie sur un unique algorithme de chiffrement homomorphe (auquel le calcul du nombre C peut être assimilé) et bénéficie des mêmes avantages que l'algorithme de Carlton et al. cité précédemment. Ce nouveau crypto-système ne requiert avantageusement que deux passes entre les deux dispositifs de calcul détenant les données secrètes x et y (chaque passe correspondant à un envoi de données par l'un des dispositifs à l'autre dispositif), et ne nécessite aucun calcul coûteux de logarithme discret contrairement à l'algorithme de Carlton et al. Il présente une complexité réduite par rapport à l'algorithme de Carlton et al. tout en assurant une sécurité semblable.

Ceci est permis par la construction de deux nombres C et D qui revêtent une forme avantageuse permettant de limiter les interactions entre les deux entités pour décider quelle donnée est supérieure ou égale à l'autre.

Plus précisément, les nombres C et D calculés conformément à l'invention par le premier et le deuxième dispositif de calcul respectivement, contiennent les données secrètes x et y sous une forme masquée (par un ou plusieurs masques $h1$, $(gh3)^v$ et $h2$), ce qui permet aux deux dispositifs de calcul de garder leurs données secrètes l'un à l'égard de l'autre. Ces masques sont choisis judicieusement dans des sous-groupes dont l'ordre est connu du premier dispositif de calcul et exploité par celui-ci pour obtenir à partir du nombre D fourni par le deuxième dispositif (et éventuellement d'un nombre complémentaire D1), une deuxième empreinte qui, comparée à la première empreinte, permet de déduire directement si x est supérieure ou égale à y ou au contraire si x est inférieure à y. L'utilisation d'empreintes générées en utilisant une fonction de hachage participe à la sécurisation du procédé, et permet, grâce à sa propriété de de résistance aux collisions, de déterminer l'ordre des données secrètes x et y via une simple comparaison de la première et de la deuxième empreinte, la probabilité que deux empreintes calculées à partir de données distinctes soient identiques étant négligeable.

La sécurisation du procédé de comparaison est en outre renforcée par l'utilisation par le deuxième dispositif de calcul, d'aléas u et v qui ont à ce titre vocation à rester inconnus du premier dispositif de calcul. Ces aléas permettent avantageusement d'éviter une recherche exhaustive simple menée sur les données secrètes x et y, à laquelle sont sensibles les calculs d'empreintes. L'aléa u introduit dans le calcul de D permet de se prémunir contre une telle attaque sans pour autant nuire au bon fonctionnement du protocole proposé par l'invention. L'aléa v quant à lui permet de masquer parfaitement l'ordre de $(D^f)^{f'}$ dont le premier dispositif de calcul pourrait déduire des informations sur le secret y du deuxième dispositif de calcul.

Comme mentionné précédemment, l'invention permet en deux passes seulement entre le premier et le deuxième dispositif de calcul de conclure comment sont positionnées les données x et y l'une par rapport à l'autre. En effet, compte tenu de la forme choisie des éléments C et D, le premier dispositif de calcul peut se ramener, moyennant quelques manipulations mathématiques sur le nombre D lui permettant en exploitant l'ordre des éléments h1, h2 et h3 qu'il connaît de supprimer du nombre D les éléments du sous-groupe H, à un nombre $(D^f)^{f'}$ dans lequel seul reste l'élément g élevé à la puissance $u.b^{d+ax-ay} + v$. On voit bien dès lors que si x est supérieure ou égale à y, g étant un élément d'ordre $b^d$, $g^{u.b^{d+ax-ay}+v} = g^v$. En exploitant cette propriété, l'invention permet au premier dispositif de calcul, à partir de ce que lui a transmis le deuxième dispositif de calcul (i.e. du nombre D, de l'empreinte de $(g.h3)^v$ et éventuellement du nombre D1), de calculer une nouvelle empreinte exploitable et comparable en quelque sorte à l'empreinte reçue du deuxième dispositif de calcul dans le sens où elle lui permet de déduire directement (c'est-à-dire sans nouvel échange avec le deuxième dispositif de calcul) en cas d'égalité, que x est supérieure ou égale à y (grâce notamment à la propriété de fonction à sens unique de la fonction de hachage). Il n'y a donc pas besoin de passes supplémentaires entre le premier dispositif de calcul et le deuxième dispositif de calcul pour être en mesure de classer les données secrètes x et y l'une par rapport à l'autre.

On note que selon les cas de figure, l'élément g peut être public (et donc partagé entre les premier et deuxième dispositifs de calcul) ou au contraire être maintenu secret par le premier dispositif de calcul à l'égard du deuxième dispositif de calcul. Le choix de garder l'élément g secret ou non résulte comme détaillé davantage ultérieurement d'un compromis entre sécurité, tailles des données pouvant être comparées et complexité de calcul.

A titre d'exemple, dans un mode particulier de réalisation :

- g est un élément public ;
- $h3 = 1$ ;
- la deuxième empreinte est obtenue en appliquant la fonction de hachage au nombre $(D^f)^{f'}$ calculé.

En effet, comme mentionné ci-avant, si x est supérieure ou égale à y, le nombre $(D^f)^{f'}$ est alors égal à $g^v$. La deuxième empreinte obtenue en appliquant la fonction de hachage directement au nombre $(D^f)^{f'}$ permet donc dans ce cas, en cas d'égalité entre les empreintes, de déduire que x est supérieure ou égale à y, ou que x est inférieure à y dans le cas contraire.

Dans un autre mode de réalisation dans lequel g est un élément maintenu secret par le premier dispositif de calcul (et donc inconnu du deuxième dispositif de calcul) :

- $h3 = h4^e$ où e est un entier maintenu secret par le premier dispositif de calcul et h4 désigne un élément du sous-groupe H ;
- le premier dispositif de calcul envoie au deuxième dispositif de calcul un nombre $h' = g. h3$, ce nombre étant utilisé par le deuxième dispositif de calcul pour calculer la première empreinte ;
- le nombre D1 calculé par le deuxième dispositif de calcul et envoyé au premier dispositif de calcul est égal à $h4^v$ ; et
- la deuxième empreinte est obtenue en appliquant la fonction de hachage au nombre $(D^f)^{f'}$ calculé multiplié par $D1^e$.

L'envoi par le deuxième dispositif de calcul du nombre D1 au premier dispositif et la connaissance qu'a le premier dispositif du secret e permettent à celui-ci de calculer, sans connaître l'aléa v utilisé par le deuxième dispositif, un nombre qui, pour des raisons similaires à celles exposées ci-avant, est égal à $(gh3)^v$ lorsque x est supérieure ou égale à y. La deuxième empreinte obtenue en appliquant la fonction de hachage au nombre $(D^f)^{f'}$ multiplié par $D1^e$ permet ainsi dans ce cas, en cas d'égalité entre les empreintes, de déduire que x est supérieure ou égale à y, ou que x est inférieure à y dans le cas contraire.

Différentes valeurs peuvent être choisies pour les entiers a, b, d, et f, ainsi que pour les aléas u et v, en fonction du niveau de sécurité désiré.

Par exemple, dans un mode particulier de réalisation, l'entier $a$ est choisi inférieur ou égal à l'entier $d$, et $b^a > 2^z$ où $z$ désigne un paramètre de sécurité prédéterminé.

Le paramètre z permet ainsi d'ajuster le niveau de sécurité souhaité. Par exemple, le paramètre z peut être choisi égal à 128, pour se conformer aux recommandations actuelles en terme de sécurité préconisées notamment dans le document intitulé « Recommendation for Key Management », NIST Spécial Publication 800-57 Part 1 Révision 4.

Par ailleurs, pour renforcer encore davantage la sécurité, dans un mode particulier de réalisation, l'entier u est choisi aléatoirement dans l'intervalle [0; $b^a$-1] et l'entier v est choisi aléatoirement dans l'intervalle [0; $b^d$-1].

Les intervalles définis pour les aléas u et v dans ce mode de réalisation permettent avantageusement de rendre négligeable la probabilité qu'un tiers mal intentionné devine les valeurs des aléas u et v.

Dans un mode particulier de réalisation, $h1 = h^{r1}$, $h2 = h^{r2}$ où r1 est un entier aléatoire et r2 est un entier aléatoire choisi dans l'intervalle [0; $b^{4z}$-1], z désignant un paramètre de sécurité prédéterminé.

L'ajout des aléas r1 et r2 permet encore de renforcer davantage la sécurité du crypto-système proposé.

Dans un mode particulier de réalisation, les différentes étapes du procédé de détermination et/ou du procédé de calcul sont déterminées par des instructions de programmes d'ordinateurs.

En conséquence, l'invention vise aussi un programme d'ordinateur sur un support d'informations, ce programme étant susceptible d'être mis en oeuvre dans un dispositif de calcul (premier ou deuxième dispositif de calcul au sens de l'invention) ou plus généralement dans un ordinateur, ce programme comportant des instructions adaptées à la mise en oeuvre des étapes d'un procédé de de détermination et/ou d'un procédé de calcul tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

On peut également envisager, dans d'autres modes de réalisation, que le procédé de comparaison, le procédé de calcul, le procédé de détermination, le premier et le deuxième dispositif de calcul et le système cryptographique selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente, de façon schématique, un système cryptographique conforme à l'invention, dans un mode particulier de réalisation ;
- la figure 2 illustre schématiquement l'architecture matérielle d'un premier dispositif de calcul et d'un deuxième dispositif de calcul du système cryptographique de la figure 1, conformes à l'invention, dans un mode particulier de réalisation ;
- la figure 3 représente sous forme de diagramme de flux les principales étapes d'un procédé de comparaison selon l'invention tel qu'il est mis en oeuvre par le système cryptographique de la figure 1, dans un premier mode de réalisation ; et
- la figure 4 représente sous forme de diagramme de flux les principales étapes d'un procédé de comparaison selon l'invention tel qu'il est mis en oeuvre par le système cryptographique de la figure 1, dans un deuxième mode de réalisation.

Description détaillée de l'invention

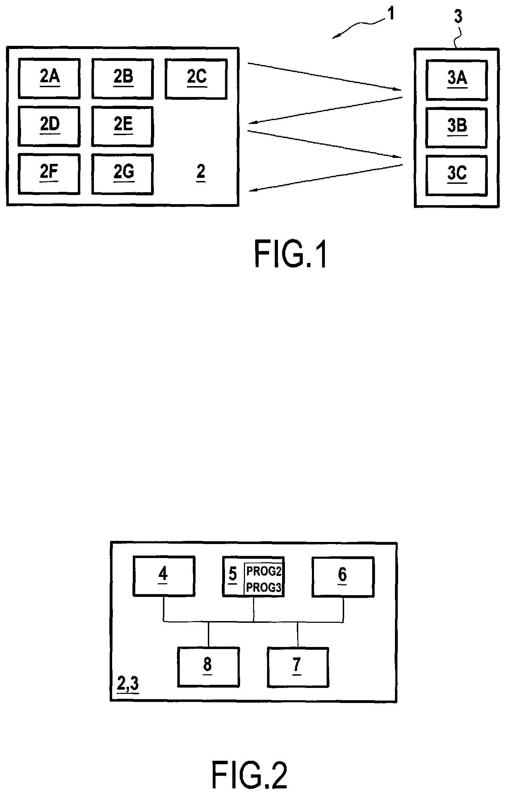

La **figure 1** représente, dans son environnement, un système cryptographique 1 conforme à l'invention, dans un mode particulier de réalisation.

Le système cryptographique 1 est conçu de sorte à permettre la réalisation de deux données entières x et y détenues respectivement par deux entités distinctes 2 et 3 tout en permettant à chacune de ces entités de maintenir secrète la donnée qu'elle détient à l'égard de l'autre entité. Autrement dit, les données secrètes peuvent être comparées grâce au système cryptographique 1 sans que l'entité 2 n'ait besoin de divulguer à l'entité 3 la donnée x et inversement, sans que l'entité 3 n'ait besoin de divulguer à l'entité 2 la donnée y.

Les deux entités 2 et 3 sont ici des dispositifs de calcul conformes à l'invention. Dans l'exemple illustré à la figure 1, l'entité 2 est un « premier » dispositif de calcul au sens de l'invention, dans le sens où c'est elle qui détermine le résultat de la comparaison des deux données secrètes x et y, et l'entité 3 est un « deuxième » dispositif de calcul au sens de l'invention.

Aucune limitation n'est attachée au contexte dans lequel le système cryptographique 1 et corrélativement, les deux entités 2 et 3, sont amenés à réaliser cette comparaison. Comme mentionné précédemment, la comparaison de deux données secrètes entières est une tâche que l'on retrouve dans de nombreux algorithmes utilisés dans divers domaines (santé, cybersécurité, finance, etc.), et notamment dans les algorithmes d'apprentissage automatique (« machine learning ») qui s'appuient sur des techniques de classification requérant la comparaison d'entiers de manière sécurisée. D'autres types d'algorithmes font également appel à la comparaison d'entiers, comme par exemple des algorithmes utilisés dans certaines systèmes de vote électronique (lorsqu'on souhaite notamment déterminer qui est le vainqueur d'une élection sans révéler les scores respectifs des différents candidats), ou d'enchères électroniques secrètes (les offres des enrichisseurs sont alors chiffrées pour rester secrètes, et on veut déterminer celui qui a fait la meilleure offre mais sans avoir à révéler les offres des autres enrichisseurs), etc.

Dans l'exemple envisagé à la figure 1, les dispositifs de calcul 2 et 3 sont des ordinateurs, dont l'architecture est illustrée schématiquement à la **figure 2.**

Chaque dispositif de calcul comprend notamment un processeur 4, une mémoire morte 5, une mémoire vive 6, une mémoire non volatile 7 (dans laquelle est stockée par exemple la donnée secrète x pour le dispositif de calcul 2 et y pour le dispositif de calcul 3) et des moyens de communication 8. Les moyens de communication 8 permettent aux dispositifs 2 et 3 de communiquer entre eux, pour s'échanger divers éléments, comme décrit plus en détail ultérieurement. Ils peuvent comprendre indifféremment une interface sans fil ou filaire, etc.

La mémoire morte 5 du dispositif de calcul 2, respectivement du dispositif de calcul 3, constitue un support d'enregistrement conforme à l'invention, lisible par le processeur 4 et sur lequel est enregistré un programme d'ordinateur PROG2, respectivement PROG3, conforme à l'invention, comportant respectivement, pour le dispositif de calcul 2, des instructions pour l'exécution des étapes du procédé de détermination selon l'invention et pour le dispositif de calcul 3, des instructions pour l'exécution des étapes du procédé de calcul selon l'invention.

Plus précisément, le programme d'ordinateur PROG2 définit via ses instructions des modules fonctionnels du dispositif de calcul 2 aptes à mettre en oeuvre les étapes du procédé de détermination et s'appuyant sur les éléments matériels 4-8 du dispositif de calcul 2. Ces modules fonctionnels comprennent notamment, dans le mode de réalisation décrit ici, comme illustré à la figure 1, un module de génération 2A, un premier module de calcul 2B, un module d'envoi 2C, un module de réception 2D, un deuxième module de calcul 2E, un module d'obtention 2F, et un module de détermination 2G.

De façon similaire, le programme d'ordinateur PROG3 définit via ses instructions des modules fonctionnels du dispositif de calcul 3 aptes à mettre en oeuvre les étapes du procédé de calcul et s'appuyant sur les éléments matériels 4-8 du dispositif de calcul 3. Ces modules fonctionnels comprennent notamment, dans le mode de réalisation décrit ici, comme illustré à la figure 1, un module de réception 3A, un module de calcul 3B et un module d'envoi 3C.

Les fonctions des différents modules du dispositif de calcul 2 et du dispositif de calcul 3 sont précisées davantage ultérieurement.

Dans un autre mode de réalisation, l'un et/ou l'autre des dispositifs de calcul 2 et 3 intègrent une puce en silicium et des moyens de communication avec les autres dispositifs du système cryptographique 1 notamment. La puce en silicium comprend des transistors adaptés pour constituer des portes logiques d'une logique câblée non programmable pour l'exécution des étapes du procédé de détermination et/ou du procédé de calcul selon l'invention.

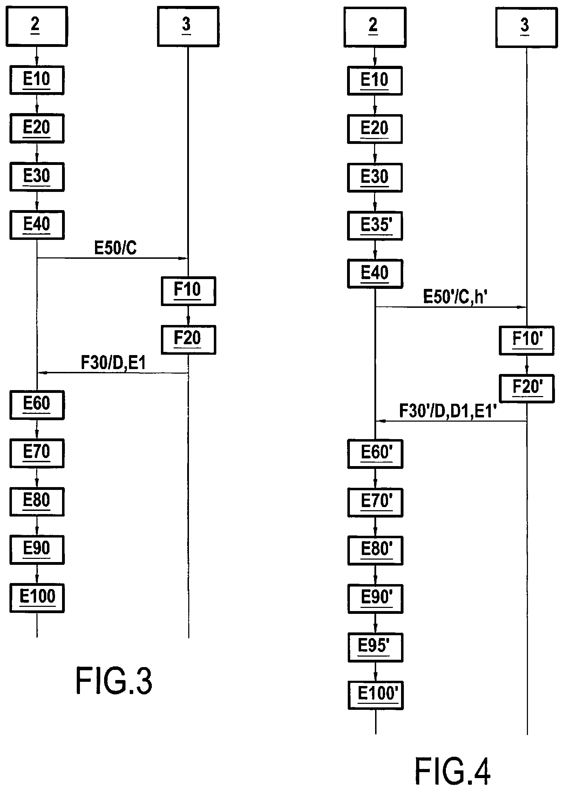

Nous allons maintenant décrire, en référence aux figures 3 et 4, les principales étapes du procédé cryptographique de comparaison selon l'invention, dans deux modes particuliers de réalisation. Ce procédé cryptographique s'appuie sur les étapes du procédé de détermination mis en oeuvre par le dispositif de calcul 2 (référencées dans la suite de la description par Exx ou Exx') et sur les étapes du procédé de calcul mis en oeuvre par le dispositif de calcul 3 (référencées dans la suite de la description par Fxx ou Fxx'). Il permet, comme souligné précédemment, au dispositif de calcul 2 de déterminer le positionnement des données secrètes x et y l'une par rapport à l'autre sans que le dispositif de calcul 2 et le dispositif de calcul 3 n'aient à divulguer la donnée secrète x ou y qu'il détient, et ce en deux passes uniquement d'échanges entre ces deux dispositifs.

Les deux modes de réalisation illustrés sur les figures 3 et 4 correspondent à deux déclinaisons différentes du procédé cryptographique de comparaison qui tiennent compte du caractère public ou secret de l'un des paramètres du procédé, et plus particulièrement de l'élément g décrit davantage ultérieurement.

Ainsi, la **figure 3** représente les principales étapes du procédé cryptographique de comparaison selon l'invention dans un premier mode de réalisation dans lequel l'élément g est public.

Conformément à l'invention, le dispositif de calcul 2, via son module de génération 2A, génère un module RSA noté N (étape E10), produit de deux entiers naturels (i.e. appartenant à l'ensemble N des entiers positifs ou nuls) p et q premiers et que le dispositif de calcul 2 garde secret. Par « secret » on entend dans cette description que le dispositif de calcul 2 ne rend pas l'élément en question public et en particulier, que le dispositif de calcul 3 n'en a pas la connaissance (et inversement lorsqu'un élément est maintenu secret par le dispositif de calcul 3).

Dans le premier mode de réalisation décrit ici, le dispositif de calcul 2, par exemple par l'intermédiaire de son module de génération 2A, choisit en outre des entiers naturels notés *a, b, d,* et f vérifiant ici les conditions suivantes (étape E20) :

- $a \leq d$ et $b^a > 2^z$ où z désigne un paramètre de sécurité prédéterminé. Par exemple, z=128 pour se conformer aux recommandations en termes de sécurité préconisées dans le document intitulé « Recommendation for Key Management », NIST Spécial Publication 800-57 Part 1 Révision 4 ;
- les données x et y à comparer sont inférieures à $d/a$; et
- f est premier avec b.

On note que la première condition est optionnelle et vise à garantir un niveau de sécurité donné à la comparaison sécurisée effectuée grâce à l'invention (correspondant à la valeur du paramètre z choisi).

On suppose que le module RSA N ainsi que les entiers *a, b,* et d sont rendus publics par le dispositif de calcul 2 (et donc en particulier partagés avec le dispositif de calcul 3). L'entier f est en revanche maintenu secret par le dispositif de calcul 2.

On note qu'il est toujours possible de se ramener à des données à comparer inférieures à $\frac{d}{a}$ . Si ce n'est pas le cas des données initialement considérées, celles-ci peuvent être segmentées en plusieurs blocs représentant chacun un entier inférieur à $\frac{d}{a}$ , par exemple de façon similaire ou identique à ce qui est décrit dans le document de Carlton et al. cité précédemment. La comparaison des données initiales est alors réalisée en comparant deux à deux les données correspondant à chaque bloc conformément à l'invention.

En variante, les entiers *a, b,* et *d* peuvent être choisis par une autre entité que le dispositif de calcul 2 et être rendus publics par cette entité pour que les dispositifs de calcul 2 et 3 en aient la connaissance.

Le dispositif de calcul 2 sélectionne également, toujours par l'intermédiaire ici de son module de génération 2A, un élément g d'un sous-groupe G de $\mathbb{Z}_N$ d'ordre $b^d$ et un élément h d'un sous-groupe H de $\mathbb{Z}_N$ d'ordre *f* (étape E30). Ainsi, par définition, les éléments g et h vérifient les égalités suivantes :

$$g^{b^d} \mod N = 1$$

$$h^f \mod N = 1$$

où mod signifie modulo.

Dans le premier mode de réalisation décrit ici, comme mentionné précédemment, l'élément g est public, et donc partagé par le dispositif de calcul 2 avec le dispositif de calcul 3. L'élément h est en revanche maintenu secret par le dispositif de calcul 3 à l'égard notamment du dispositif de calcul 2. Il permet au premier dispositif de calcul 2 de masquer sa donnée secrète x, comme détaillé ci-après.

Le dispositif de calcul 2 calcule alors, au moyen de son premier module de calcul 2B, un nombre C défini par (étape E40) :

$$C = g^{b^{ax}} h1$$

où h1 est un élément du sous-groupe H (par conséquent d'ordre f).

On note que comme la donnée secrète x est par définition inférieure à d/a, le nombre C est assuré de ne pas valoir un, ce qui permet d'assurer un bon fonctionnement du protocole.

Dans l'exemple envisagé ici, le premier module de calcul 2B choisit *h*1 égal à $h^{r1}$ où *r*1 est un entier naturel choisi de manière aléatoire par le premier module de calcul 2B. Bien entendu cet exemple n'est donné qu'à titre illustratif. L'entier aléatoire $r1$ est maintenu secret par le dispositif de calcul 2 à l'égard du dispositif de calcul 3. On note qu'à cet effet, il peut être tout simplement effacé de la mémoire du dispositif de calcul 2 juste après avoir servi au calcul du nombre $C$.

Le dispositif de calcul 2 envoie ensuite, via son module d'envoi 2C et ses moyens de communication 8, le nombre $C$ ainsi calculé au dispositif de calcul 3 (étape E50).

Sur réception du nombre $C$ via son module de réception 3A et ses moyens de communication 8 (étape F10), le dispositif de calcul 3 calcule, par l'intermédiaire de son module de calcul 3B, un nombre $D$ égal à (étape F20) :

$$D = C^{u.b^{d-ay}}(gh3)^v h2$$

où u et v désignent deux entiers naturels aléatoires, et $h2$ et $h3$ des éléments du sous-groupe H.

Dans le premier mode de réalisation décrit ici, $h3 = 1$ et $h2 = h^{r2}$ où $r2$ est un entier naturel aléatoire choisi dans l'intervalle $[0; b^{4z}\text{-}1]$. On note toutefois que cet exemple pour le choix de $h2$ et $h3$ n'est donné qu'à titre illustratif, et n'est pas limitatif en soi. En particulier, dans le premier mode de réalisation, compte tenu de la nature publique de l'élément g, en prenant $h3 = 1$, on choisit de ne pas masquer cet élément par souci de simplification. Toutefois, cette hypothèse n'est pas limitative en soi et d'autres stratégies peuvent être envisagées.

On note que le choix de l'intervalle $[0; b^{4z}\text{-}1]$ pour sélectionner l'aléa $r2$ n'est pas limitatif en soi et d'autres intervalles peuvent être considérés. Cet intervalle permet toutefois de garantir une certaine sécurité au procédé de comparaison, compatible avec les recommandations préconisées dans le document « Recommendation for Key Management », cité précédemment.

Les entiers aléatoires u, v, et $r2$ sont maintenus secrets par le dispositif de calcul 2 à l'égard du dispositif de calcul 3. On note qu'à cet effet, comme l'aléa $r1$ précédemment, ils peuvent être tout simplement effacés de la mémoire du dispositif de calcul 3 juste après avoir servi au calcul du nombre $D$.

Dans le premier mode de réalisation décrit ici où l'élément g est public et $h3 = 1$, le nombre $D$ calculé par le module de calcul 3B est donc défini de manière équivalente par :

$$D = C^{u.b^{d-ay}} g^v h^{r2}$$

Le module de calcul 3B calcule également, lors de l'étape F20, une empreinte notée E1 (première empreinte au sens de l'invention) du nombre $(gh3)^v = g^v$ en utilisant, de façon connue en soi, une fonction de hachage notée HASH. Une telle fonction est connue de l'homme du métier, et n'est pas décrite plus en détail ici. Des exemples de fonctions de hachage sont les fonctions SHA 256 et SHA 512 telles que définies dans le document « Secure Hash Standard », FIPS PUB 180-4 publié en août 2015 par le NIST.

Plus particulièrement, pour calculer l'empreinte E1, le module de calcul 3B applique ici directement la fonction de hachage HASH sur le nombre $g^v$, soit :

$$E1 = \text{HASH}(g^v)$$

Puis le dispositif de calcul 3 envoie, via son module d'envoi 3C et ses moyens de communication 8, le nombre $D$ et l'empreinte $E1$ au dispositif de calcul 2 (étape F30).

On note que les étapes d'envoi E50 et F30 constituent respectivement une première et une deuxième passe entre les dispositifs de calcul 2 et 3 du procédé de comparaison selon l'invention.

Sur réception du nombre $D$ et de l'empreinte $E1$ via son module de réception 2D et ses moyens de communication 8 (étape E60), le dispositif de calcul 2 procède à différentes manipulations mathématiques sur le nombre $D$ via son deuxième module de calcul 2E pour calculer une empreinte $E2$ (deuxième empreinte au sens de l'invention), qu'il peut comparer à l'empreinte $E1$ fournie par le deuxième dispositif de calcul 3 pour déterminer si x est supérieure ou égale à y ou si x est inférieure à y.

Plus spécifiquement, le deuxième module de calcul 2E élève tout d'abord le nombre $D$ à la puissance f, f désignant pour mémoire l'ordre des éléments du sous-groupe de H (étape E70). Il obtient alors :

$$D^f = \left(C^{u.b^{d-ay}} g^v h^{r2}\right)^f$$

soit en remplaçant $C$ par $g^{bax}h^{r1}$ et en notant que $(g^{n1})^{n2} = g^{n1.n2} = (g^{n2})^{n1}$ si $n1$ et $n2$ désignent deux nombres :

$$D^f = (g^f)^{ub^{d+ax-ay}+v} (h^f)^{r1ub^{d-ay}+r2}$$

L'élément h étant d'ordre $f$ cela signifie que $h^f = 1$, autrement dit, à l'issue de l'étape de calcul E70, le deuxième module de calcul 2E obtient le nombre $D^f$ qui peut s'écrire sous la forme :

$$D^f = (g^f)^{ub^{d+ax-ay}+v}$$

L'élévation à la puissance $f$ du nombre D permet ainsi au deuxième module de calcul 2E d'éliminer les termes en h dans le nombre D, ou plus généralement tous les éléments contenus dans le nombre $D$ appartenant au sous-groupe H. En d'autres mots ici, il supprime du nombre $D$ tous les éléments en h élevés à une certaine puissance en s'appuyant sur sa connaissance de l'ordre $f$ des éléments du sous-groupe H. On note que l'ordre f des éléments du sous-groupe H peut, de façon connue, être obtenu à partir des nombres premiers p et q du module RSA N (et plus précisément de la factorisation de p-1 et q-1).

Le deuxième module de calcul 2E élève ensuite le résultat obtenu pour le calcul de $D^f$ à la puissance $f'$ où $f'$ désigne l'inverse de $f$ modulo $b^d$ (étape E80). Autrement dit :

$$ff' = 1 \bmod b^d$$

Il obtient alors un résultat qui se peut s'écrire sous la forme :

$$(D^f)^{f'} = \left((g^f)^{ub^{d+ax-ay}+v}\right)^{f'} = (g^{f.f'})^{ub^{d+ax-ay}+v} = g^{ub^{d+ax-ay}+v}$$

Puis le module d'obtention 2F du dispositif de calcul 2 calcule une empreinte, notée E2 du résultat obtenu en utilisant la fonction de hachage HASH (étape E90), soit :

$$E2 = \text{HASH}\left((D^f)^{f'}\right)$$

qui peut s'écrire de manière équivalente sous la forme :

$$E2 = \text{HASH}\left(g^{ub^{d+ax-ay}+v}\right) \quad (1)$$

On note que l'étape de calcul E80 peut être réalisée indifféremment par le module de calcul 2E ou par le module d'obtention 2F du dispositif de calcul 2.

En s'appuyant sur la relation (1) ci-dessus, le module de comparaison 2G du dispositif de calcul 2 compare les empreintes $E1$ et $E2$ (étape E100), et en fonction du résultat de la comparaison détermine comment se situe la donnée secrète x par rapport à la donnée secrète y sans que le premier et le deuxième dispositif n'aient besoin de se révéler les données x et y. Plus précisément, le module de comparaison 2G détermine ici, avec les conventions adoptées, que :

- x est supérieure ou égale à y si $E1 = E2$ ; ou que
- x est inférieure à y si $E1 \neq E2$.

En effet, en partant de la relation (1), il apparaît que si x est supérieure ou égale à y, alors $d + ax - ay \geq d$ et le terme $g^{ub^{d+ax-ay}+v}$ se réduit à $g^v$, g étant d'ordre $b^d$. Calculer l'empreinte $E2$ revient donc à calculer l'empreinte de $g^v$, qui par définition, correspond à l'empreinte $E1$ calculée et transmise par le dispositif de calcul 3.

A l'inverse, la relation (1), si x est inférieure à y, on ne peut pas conclure que $g^{ub^{d+ax-ay}} = 1$. Mais la propriété de résistance aux collisions des fonctions de hachage, qui assure que deux empreintes de valeurs distinctes ont une probabilité négligeable d'être égales, permet en revanche de conclure que si $E1 \neq E2$, cela signifie que x est bien inférieure à y.

Dans le premier mode de réalisation décrit ici, nous avons supposé que l'élément g sélectionné par le dispositif de calcul 2 est public, et connu du dispositif de calcul 3. La **figure 4** représente les principales étapes du procédé cryptographique de comparaison selon l'invention dans un deuxième mode de réalisation dans lequel l'élément g est gardé secret par le dispositif de calcul 2 et n'est donc pas connu du dispositif de calcul 3. Sur la figure 4, les étapes du deuxième mode de réalisation qui sont identiques à celles du premier mode de réalisation sont associées à la même référence et ne sont pas décrites de nouveau dans le détail.

Dans le deuxième mode de réalisation comme dans le premier mode de réalisation, le dispositif de calcul 2, via son module de génération 2A, génère un module RSA noté N (étape E10), produit de deux entiers naturels p et q premiers entre eux et que le dispositif de calcul 2 garde secret.

Le dispositif de calcul 2 choisit en outre des entiers naturels notés *a,b,d,* et *f* vérifiant les hypothèses suivantes (étape E20) :

- $a \leq d$ et $b^a > 2^z$ où z désigne un paramètre de sécurité (entier) prédéterminé. Par exemple, z=128 pour se conformer aux recommandations en termes de sécurité préconisées dans le document intitulé « Recommendation for Key Management », NIST Special Publication 800-57 Part 1 Révision 4 ;
- les données x et y à comparer sont inférieures à $d/a$; et
- *f* est premier avec *b*.

Le module RSA N et les entiers *a, b,* et *d* sont rendus publics par le dispositif de calcul 2 et l'entier *f* est maintenu secret.

Le dispositif de calcul 2 sélectionne également, toujours par l'intermédiaire ici de son module de génération 2A, un élément g d'un sous-groupe G de $\mathbb{Z}_N$ d'ordre $b^d$ et un élément h d'un sous-groupe H de $\mathbb{Z}_N$ d'ordre *f* (étape E30). Par définition, les éléments g et h vérifient les égalités suivantes :

$$g^{b^d} \bmod N = 1$$

$$h^f \bmod N = 1$$

où mod signifie modulo.

Dans le deuxième mode de réalisation, l'élément g est gardé secret par le dispositif de calcul 2 tout comme l'élément h. Pour tenir compte de cette contrainte, le dispositif de calcul 2, via par exemple son module de génération 2A, génère à partir de l'élément g un élément h' vérifiant la relation suivante (étape E35') :

$$h' = gh4^e$$

où *h*4 est un élément du sous-groupe H, et *e* désigne un entier sélectionné et maintenu secret par le dispositif de calcul 2. Dans l'exemple envisagé ici, par souci de simplification, le module de génération 2A prend *h*4 = *h,* mais cet exemple n'est donné qu'à titre illustratif.

Puis, le dispositif de calcul 2 calcule, au moyen de son premier module de calcul 2B, comme dans le premier mode de réalisation, le nombre C défini par (étape E40) :

$$C = g^{b^{ax}} h1$$

où *h*1 est un élément du sous-groupe H (par conséquent d'ordre *f*). Dans l'exemple envisagé ici, le premier module de calcul 2B choisit *h*1 égal à $h^{r1}$ où *r*1 est un entier naturel choisi aléatoirement. L'entier aléatoire *r*1 est maintenu secret par le dispositif de calcul 2 à l'égard du dispositif de calcul 3 (par exemple en étant tout simplement effacé de sa mémoire après son utilisation pour calculer C).

Le dispositif de calcul 2 envoie alors via son module d'envoi 2C et ses moyens de communication 8, le nombre *C* et le nombre *h'* au dispositif de calcul 3 (étape E50').

Sur réception des nombres *C* et h'via son module de réception 3A et ses moyens de communication 8 (étape F10'), le dispositif de calcul 3 calcule comme dans le premier mode de réalisation, par l'intermédiaire de son module de calcul 3B, un nombre *D* défini par (étape F20') :

$$D = C^{u.b^{d-ay}}(gh3)^v h2$$

où u et v désignent deux entiers naturels aléatoires, et $h2$ et $h3$ des éléments du sous-groupe H. Plus particulièrement, dans le deuxième mode de réalisation décrit ici, par souci de simplification, le module de calcul 3B choisit $h3 = h4^e$(ce qui lui permet de réutiliser directement $h$'reçu du dispositif de calcul 2) et $h2 = h^{r2}$ où r2 est un entier aléatoire choisi dans l'intervalle [0; $b^{4z}$-1].

On note que la condition selon laquelle la donnée y est inférieure à d/a garantit que le dispositif de calcul 3 est toujours capable de calculer l'élément $D$.

Les entiers aléatoires u, v, et $r2$ sont maintenus secrets par le dispositif de calcul 2 à l'égard du dispositif de calcul 3 comme dans le premier mode de réalisation.

Dans le deuxième mode de réalisation décrit ici où l'élément g est secret et donc non connu du dispositif de calcul 3, le nombre $D$ calculé par le module de calcul 3B est donc défini de manière équivalente par :

$$D = C^{u.b^{d-ay}}(gh4^e)^v h^{r2}$$

Par ailleurs, dans le deuxième mode de réalisation, le module de calcul 3B calcule également lors de l'étape F20 une empreinte notée E1' (première empreinte au sens de l'invention) du nombre $(gh3)^v = (gh4^e)^v$ en utilisant une fonction de hachage HASH. Plus particulièrement, le module de calcul 3B calcule l'empreinte E1' en appliquant directement la fonction de hachage HASH sur le nombre$(gh4^e)^v$ qu'il a reçu du dispositif de calcul 2, soit :

$$E1' = \mathrm{HASH}((gh4^e)^v)$$

Dans ce deuxième mode de réalisation, pour « compenser » le fait que l'élément g est maintenu secret par le dispositif de calcul 2, le dispositif de calcul 3 calcule un nombre additionnel, noté D1. Comme il est décrit plus en détail ultérieurement, ce nombre D1 est destiné à permettre au dispositif de calcul 2 de calculer une deuxième empreinte comparable à l'empreinte $E1$' sans connaître l'aléa v qui lui permet de déterminer l'ordre des données secrètes x et y. Plus précisément, dans l'exemple envisagé ici où h3 = $h4^e$, le nombre $D1$ est défini par :

$$D1 = h4^v \; ;$$

Puis le dispositif de calcul 3 envoie, via son module d'envoi 3C et ses moyens de communication 8, les nombres $D$ et $D1$, et l'empreinte E1' au dispositif de calcul 2 (étape F30').

Sur réception des nombres $D$ et $D1$ ainsi que de l'empreinte $E1$ via son module de réception 2D et ses moyens de communication 8 (étape E60'), le dispositif de calcul 2 procède à différentes manipulations mathématiques sur le nombre $D$ via son deuxième module de calcul 2E pour calculer une empreinte $E2$' (deuxième empreinte au sens de l'invention), qu'il peut comparer à l'empreinte E1' fournie par le deuxième dispositif de calcul 3 pour déterminer si x est supérieure ou égale à y ou si x est inférieure à y.

Plus spécifiquement, le deuxième module de calcul 2E élève tout d'abord le nombre $D$ à la puissance $f$, $f$ désignant pour mémoire l'ordre des éléments du sous-groupe de H (étape E70'). Il obtient alors :

$$D^f = \left( C^{u.b^{d-ay}}(gh4^e)^v h^{r2} \right)^f$$

soit en remplaçant $C$ par $g^{b^{ax}}h^{r1}$ et en notant que $(g^{n1})^{n2} = g^{n1.n2} = (g^{n2})^{n1}$ si $n1$ et $n2$ désignent deux nombres entiers :

$$D^f = (g^f)^{ub^{d+ax-ay}+v}(h^f)^{r1ub^{d-ay}+r2+ev}$$

L'élément h étant d'ordre f cela signifie que $h^f = 1$, autrement dit, à l'issue de l'étape de calcul E70, le deuxième module de calcul 2E obtient le nombre $D^f$ qui peut s'écrire sous la forme :

$$D^f = (g^f)^{ub^{d+ax-ay}+v}$$

L'élévation à la puissance f du nombre D permet ainsi au deuxième module de calcul 2E d'éliminer les termes en h dans le nombre D, ou plus généralement tous les éléments contenus dans le nombre *D* appartenant au sous-groupe H.

Comme dans le premier mode de réalisation, le deuxième module de calcul 2E élève ensuite le résultat obtenu pour le calcul de $D^f$ à la puissance *f'* où *f'* désigne l'inverse de *f* modulo $b^d$ (étape E80'). Autrement dit :

$$ff' = 1 \bmod b^d$$

Il obtient alors un résultat qui se peut s'écrire sous la forme :

$$(D^f)^{f'} = \left((g^f)^{ub^{d+ax-ay}+v}\right)^{f'} = (g^{f.f'})^{ub^{d+ax-ay}+v} = g^{ub^{d+ax-ay}+v}$$

Puis le deuxième module de calcul 2E multiplie le résultat obtenu pour $(D^f)^{f'}$ par le nombre $(D1)^e$ (étape E90'). Cette multiplication permet au dispositif de calcul 2 de compenser la méconnaissance par le dispositif de calcul 3 de l'élément g et de tenir compte de l'empreinte calculée par celui-ci de ce fait non plus sur l'élément $g^v$ comme dans le premier mode de réalisation, mais sur l'élément $(gh4^e)^v = (gh^e)^v$.

Puis le module d'obtention 2F du dispositif de calcul 2 calcule une empreinte, notée E2' en appliquant la fonction de hachage HASH sur le résultat obtenu (étape E95'), soit :

$$E2' = \text{HASH}\left((D^f)^{f'}(D1)^e\right)$$

qui peut s'écrire de manière équivalente sous la forme :

$$E2' = \text{HASH}(g^{ub^{d+ax-ay}}(gh^e)^v) \quad (2)$$

En s'appuyant sur la relation (2) ci-dessus, le module de comparaison 2G du dispositif de calcul 2 compare les empreintes E1' et E2' (étape E100'), et en fonction du résultat de la comparaison détermine comment se situe la donnée secrète x par rapport à la donnée secrète y sans que le premier et le deuxième dispositif n'aient besoin de se révéler les données x et y. Plus précisément, le module de comparaison 2G détermine ici, avec les conventions adoptées, que :

- x est supérieure ou égale à y si E1' = *E2*' ; ou que
- x est inférieure à y si $E1' \neq E2'$.

En effet, en partant de la relation (2), il apparaît que si x est supérieure ou égale à y, alors d + ax - ay ≥ d et le terme $g^{ub^{d+ax-ay}}$ se réduit à 1, g étant d'ordre $b^d$. Calculer l'empreinte E2' revient donc à calculer l'empreinte de $(gh^e)^v$, qui par définition, correspond à l'empreinte *E*1' calculée et transmise par le dispositif de calcul 3.

A l'inverse, la relation (2), si x est inférieure à y, on ne peut pas conclure que $g^{ub^{d+ax-ay}} = 1$. Mais la propriété de résistance aux collisions des fonctions de hachage, qui assure que deux empreintes de valeurs distinctes ont une probabilité négligeable d'être égales, permet en revanche de conclure que si $E1' \neq E2'$, cela signifie que x est bien inférieure à y.

Dans la description précédente, on a envisagé deux modes de réalisation selon si l'élément g est maintenu ou non secret par le dispositif de calcul 2. On note que le choix de maintenir ou non g secret peut avoir des conséquences sur les différents paramètres du procédé de comparaison et sur son efficacité.

A titre illustratif, dans le premier mode de réalisation où l'élément g est public, la garantie d'un certain niveau de sécurité, typiquement celui préconisé par les recommandations citées précédemment, peut imposer certaines conditions dans le choix des paramètres. Ainsi, par exemple, il est préférable de s'assurer que $b^d < N^{1/4}$, ce qui peut limiter la valeur de l'entier *d,* et donc corrélativement, la taille des données secrètes x et y pouvant être comparées.

Dans le deuxième mode de réalisation où l'élément g est maintenu secret, la restriction sur l'entier *d* pour atteindre un niveau de sécurité similaire est moins forte, i.e. il est préférable de s'assurer que $b^d$. $2^{256} < N^{1/2}$. Mais il est également préférable dans ce cas que les entiers premiers p et q choisis par le dispositif de calcul 2 pour générer le module RSA N soit de taille suffisante, par exemple 3072 bits, ce qui est le double de la taille standard des entiers généralement considérés pour générer un module RSA. A paramètres comparables, ce deuxième mode de réalisation permet donc de traiter des nombres deux fois plus grands que le premier mode de réalisation mais induit davantage de calculs que le premier mode de réalisation.

Le choix de garder l'élément g secret ou non résulte donc d'un compromis entre sécurité, tailles des données pouvant être comparées et complexité de calcul.

**Revendications**

1. Procédé cryptographique de comparaison sécurisée de deux données secrètes x et y entières, détenues respectivement par un premier dispositif de calcul (2) et par un deuxième dispositif de calcul (3), ledit procédé comprenant :

    - une étape de génération (E10), par le premier dispositif de calcul, d'un module RSA noté N ;
    - une étape de calcul (E40), par le premier dispositif de calcul, d'un nombre C égal à $g^{bax}h1$ où g est un élément d'un sous-groupe G de $\mathbb{Z}_N$ d'ordre $b^d$, h1 est un élément d'un sous-groupe H de $\mathbb{Z}_N$ d'ordre f, et a, b, d, et f désignent des entiers tels que b et f sont premiers entre eux, et les données x et y sont inférieures à d/a ;
    - une étape d'envoi (E50,E50') par le premier dispositif de calcul du nombre C au deuxième dispositif de calcul ;
    - une étape de calcul (F20,F20')) par le deuxième dispositif de calcul d'au moins :

        ◦ un nombre D égal à $C^{u.b^{d-ay}}(gh3)^v h2$ où u et v désignent deux entiers aléatoires, et h2 et h3 des éléments du sous-groupe H ; et
        ◦ d'une première empreinte (E1) de $(gh3)^v$ calculée en utilisant une fonction de hachage ;

    - une étape d'envoi (F30,F30') par le deuxième dispositif de calcul au premier dispositif de calcul du nombre D et de la première empreinte ;
    - une étape de calcul (E70,E80,E70',E80') par le premier dispositif de calcul du nombre $(D^f)^{f'}$ où $f'$ est l'inverse de f modulo $b^d$ ;
    - une étape d'obtention (E90,E90',E95') par le premier dispositif de calcul, à partir du nombre $(D^f)^{f'}$ calculé, d'une deuxième empreinte (E2) en utilisant la fonction de hachage ; et
    - une étape de détermination (E100,E100'), par le premier dispositif de calcul, que x est supérieure ou égale à y ou que x est inférieure à y en fonction du résultat d'une comparaison entre la première empreinte et la deuxième empreinte.

2. Procédé cryptographique selon la revendication 1 comprenant en outre le calcul par le deuxième dispositif de calcul d'un nombre D1 qu'il envoie au premier dispositif de calcul et qui est utilisé par celui-ci pour obtenir la deuxième empreinte.

3. Procédé cryptographique selon la revendication 1 dans lequel :

    - g est un élément public ;
    - $h3 = 1$ ;
    - la deuxième empreinte est obtenue en appliquant la fonction de hachage au nombre $(D^f)^{f'}$ calculé.

4. Procédé cryptographique selon la revendication 2 dans lequel :

    - g est un élément maintenu secret par le premier dispositif de calcul et $h3 = h4^e$ où e est un entier maintenu secret par le premier dispositif de calcul et h4 désigne un élément du sous-groupe H ;
    - le premier dispositif de calcul envoie au deuxième dispositif de calcul un nombre $h' = g.h3$, ce nombre étant utilisé par le deuxième dispositif de calcul pour calculer la première empreinte ;
    - le nombre D1 calculé par le deuxième dispositif de calcul et envoyé au premier dispositif de calcul est égal à $h4^v$ ; et
    - la deuxième empreinte est obtenue en appliquant la fonction de hachage au nombre $(D^f)^{f'}$ calculé multiplié par $D1^e$.

5. Procédé cryptographique selon l'une quelconque des revendications 1 à 4 dans lequel l'entier a est choisi inférieur ou égal à l'entier d, et $b^a > 2^z$ où z désigne un paramètre de sécurité prédéterminé.

6. Procédé cryptographique selon l'une quelconque des revendications 1 à 5 dans lequel l'entier u est choisi aléatoirement dans l'intervalle [0; $b^a$-1] et l'entier v est choisi aléatoirement dans l'intervalle [0; $b^d$-1].

7. Dispositif de calcul (2), dit premier dispositif de calcul, détenant et maintenant secrète une donnée entière x, ledit premier dispositif de calcul comprenant :

- un module de génération (2A), configuré pour générer un module RSA noté N ;
- un premier module de calcul (2B), configuré pour calculer un nombre C égal à $g^{bax}h1$ où $g$ est un élément d'un sous-groupe G de $\mathbb{Z}_N$ d'ordre $b^d$, $h1$ est un élément d'un sous-groupe H de $\mathbb{Z}_N$ d'ordre $f$, et $a, b, d$, et $f$ désignent des entiers tels que $b$ et $f$ sont premiers entre eux et la donnée x est inférieure à $d/a$ ;
- un module d'envoi (2C), configuré pour envoyer le nombre C à un deuxième dispositif de calcul détenant et maintenant secrète une donnée entière y, la donnée y étant inférieure à $d/a$ ;
- un module de réception (2D), apte à recevoir du deuxième dispositif de calcul au moins :

  ○ un nombre D égal à $C^{u.bd-ay}(gh3)^v h2$ où u et v désignent deux entiers aléatoires, et $h2$ et $h3$ des éléments du sous-groupe H ; et
  ○ une première empreinte de $(gh3)''$ calculée en utilisant une fonction de hachage ;

- un deuxième module de calcul (2E), configuré pour calculer un nombre $(D^f)^{f'}$ où $f'$ est l'inverse de f modulo $b^d$ ;
- un module d'obtention (2F), configuré pour obtenir à partir du nombre $(D^f)^{f'}$ calculé une deuxième empreinte en utilisant la fonction de hachage ; et
- un module de détermination (2G), configuré pour déterminer que x est supérieure ou égale à y ou que x est inférieure à y en fonction du résultat d'une comparaison entre la première empreinte et la deuxième empreinte.

8. Dispositif de calcul (3), dit deuxième dispositif de calcul, détenant et maintenant secrète une donnée entière y, ledit deuxième dispositif de calcul comprenant :

- un module de réception (3A), apte à recevoir d'un premier dispositif de calcul détenant et maintenant secrète une donnée entière x, un nombre C égal à $g^{bax}h1$ où $g$ est un élément d'un sous-groupe G de $\mathbb{Z}_N$ d'ordre $b^d$, $h1$ est un élément d'un sous-groupe H de $\mathbb{Z}_N$ d'ordre $f$, et $a, b, d$, et $f$ désignent des entiers tels que $b$ et $f$ sont premiers entre eux et les données x et y sont inférieures à $d/a$ ;
- un module de calcul (3B), configuré pour calculer au moins :

  ○ un nombre D égal à $C^{u.bd-ay}(gh3)^v h2$ où u et v désignent deux entiers aléatoires, et $h2$ et $h3$ des éléments du sous-groupe H ; et
  ○ une empreinte de $(gh3)^v$ calculée en utilisant une fonction de hachage ;

- un module d'envoi (3C), configuré pour envoyer au premier dispositif de calcul le nombre D et l'empreinte calculée, pour permettre au premier dispositif de calcul de déterminer sans connaître y si x est supérieure ou égale à y ou si x est inférieure à y.

9. Procédé de détermination, destiné à être mis en oeuvre par un premier dispositif de calcul, détenant et maintenant secrète une donnée entière x, ledit procédé de détermination comprenant :

- une étape de génération d'un module RSA noté N ;
- une étape de calcul d'un nombre C égal à $g^{bax}h1$ où g est un élément d'un sous-groupe G de $\mathbb{Z}_N$ d'ordre $b^d$, $h1$ est un élément d'un sous-groupe H de $\mathbb{Z}_N$ d'ordre $f$, et $a, b, d$, et $f$ désignent des entiers tels que $b$ et $f$ sont premiers entre eux et la donnée x est inférieure à $d/a$ ;
- une étape d'envoi du nombre C à un deuxième dispositif de calcul détenant et maintenant secrète une donnée entière y, la donnée y étant inférieure à $d/a$ ;
- une étape de réception en provenance du deuxième dispositif de calcul d'au moins :

  ○ un nombre D égal à $C^{u.bd-ay}(gh3)^v h2$ où u et v désignent deux entiers aléatoires, et $h2$ et $h3$ des éléments du sous-groupe H ; et
  ○ d'une première empreinte de $(gh3)^v$ calculée en utilisant une fonction de hachage ;

- une étape de calcul par le premier dispositif de calcul du nombre $(D^f)^{f'}$ où $f'$ est l'inverse de f modulo $b^d$ ;
- une étape d'obtention par le premier dispositif de calcul, à partir du nombre $(D^f)^{f'}$ calculé, d'une deuxième empreinte en utilisant la fonction de hachage ; et
- une étape de détermination, par le premier dispositif de calcul, que x est supérieure ou égale à y ou que x est inférieure à y en fonction du résultat d'une comparaison entre la première empreinte et la deuxième empreinte.

10. Procédé de calcul, destiné à être mis en oeuvre par un dispositif de calcul dit deuxième dispositif de calcul, détenant et maintenant secrète une donnée entière y, ledit procédé de calcul comprenant :

- une étape de réception en provenance d'un premier dispositif de calcul détenant et maintenant secrète une donnée entière x, d'un nombre C égal à $g^{ba^x}h1$ où $g$ est un élément d'un sous-groupe G de $\mathbb{Z}_N$ d'ordre $b^d$, $h1$ est un élément d'un sous-groupe H de $\mathbb{Z}_N$ d'ordre $f$, et $a, b, d,$ et $f$ désignent des entiers tels que b et $f$ sont premiers entre eux et les données x et y sont inférieures à $d/a$ ;
- une étape de calcul d'au moins :

  ∘ un nombre D égal à $C^{u.b^{d-a y}}(gh3)^v h2$ où u et v désignent deux entiers aléatoires, et $h2$ et $h3$ des éléments du sous-groupe H ; et
  ∘ d'une empreinte de $(gh3)^v$ calculée en utilisant une fonction de hachage ;

- une étape d'envoi au premier dispositif de calcul du nombre D et de l'empreinte calculée, pour permettre au premier dispositif de calcul de déterminer sans connaître y si x est supérieure ou égale à y ou si x est inférieure à y.

11. Programme d'ordinateur (PROG2,PROG3) comportant des instructions conduisant à l'exécution des étapes d'un procédé de détermination selon la revendication 9 ou d'un procédé de calcul selon la revendication 10 lorsque lesdites instructions sont exécutées par un ordinateur.

12. Système cryptographique (1) apte à comparer deux données secrètes entières x et y et comprenant :

- un premier dispositif de calcul (2) selon la revendication 7, détenant et maintenant la donnée x secrète ; et
- un deuxième dispositif de calcul (3) selon la revendication 8, détenant et maintenant la donnée y secrète.

**Patentansprüche**

1. Kryptografisches Verfahren zum sicheren Vergleich zweier ganzzahliger geheimer Daten x und y, die von einer ersten Rechenvorrichtung (2) bzw. von einer zweiten Rechenvorrichtung (3) gehalten werden, wobei das Verfahren umfasst:

- einen Schritt der Erzeugung (E10), durch die erste Rechenvorrichtung, eines RSA-Moduls, der mit N bezeichnet wird;
- einen Schritt der Berechnung (E40), durch die erste Rechenvorrichtung, einer Zahl C, die gleich $g^{ba^x}h1$ ist, wobei $g$ ein Element einer Untergruppe G von $\mathbb{Z}_N$ der Ordnung $b^d$ ist, $h1$ ein Element einer Untergruppe H von $\mathbb{Z}_N$ der Ordnung $f$ ist und $a,b,d$ und $f$ solche ganze Zahlen bezeichnen, dass $b$ und f zueinander prim sind und die Daten x und y kleiner als $d/a$ sind;
- einen Schritt des Sendens (E50,E50'), durch die erste Rechenvorrichtung, der Zahl C an die zweite Rechenvorrichtung;
- einen Schritt der Berechnung (F20,F20'), durch die zweite Rechenvorrichtung, wenigstens:

  o einer Zahl D, die gleich $C^{u.b^{d-a y}}(gh3)^v h2$ ist, wobei u und v zwei zufällige ganze Zahlen und $h2$ und $h3$ Elemente der Untergruppe H bezeichnen; und
  o eines ersten Fingerabdrucks (E1) von $(gh3)^v$, der unter Verwendung einer Hashfunktion berechnet wird;

- einen Schritt des Sendens (F30,F30'), durch die zweite Rechenvorrichtung an die erste Rechenvorrichtung, der Zahl D und des ersten Fingerabdrucks;

- einen Schritt der Berechnung (E70,E80,E70',E80'), durch die erste Rechenvorrichtung, der Zahl $(D^f)^{f'}$, wobei f' das Inverse von f modulo $b^d$ ist;
- einen Schritt des Erhaltens (E90,E90',E95'), durch die erste Rechenvorrichtung, ausgehend von der berechneten Zahl $(D^f)^{f'}$, eines zweiten Fingerabdrucks (E2) unter Verwendung der Hashfunktion; und
- einen Schritt der Bestimmung (E100,E100'), durch die erste Rechenvorrichtung, ob x größer oder gleich y ist oder ob x kleiner als y ist, in Abhängigkeit vom Ergebnis eines Vergleichs zwischen dem ersten Fingerabdruck und dem zweiten Fingerabdruck.

2. Kryptografisches Verfahren nach Anspruch 1, welches außerdem die Berechnung, durch die zweite Rechenvorrichtung, einer Zahl D1 umfasst, die sie an die erste Rechenvorrichtung sendet und die von dieser verwendet wird, um den zweiten Fingerabdruck zu erhalten.

3. Kryptografisches Verfahren nach Anspruch 1, wobei:

   - g ein öffentliches Element ist;
   - $h3 = 1$ ;
   - der zweite Fingerabdruck erhalten wird, indem die Hashfunktion auf die berechnete Zahl $(D^f)^{f'}$ angewendet wird.

4. Kryptografisches Verfahren nach Anspruch 2, wobei:

   - g ein Element ist, das von der ersten Rechenvorrichtung geheim gehalten wird, und h3 = h4$^e$ ist, wobei e eine ganze Zahl ist, die von der ersten Rechenvorrichtung geheim gehalten wird, und h4 ein Element der Untergruppe H bezeichnet;
   - die erste Rechenvorrichtung an die zweite Rechenvorrichtung eine Zahl h' = g.h3 sendet, wobei diese Zahl von der zweiten Rechenvorrichtung verwendet wird, um den ersten Fingerabdruck zu berechnen;
   - die von der zweiten Rechenvorrichtung berechnete und an die erste Rechenvorrichtung gesendete Zahl D1 gleich h4$^v$ ist; und
   - der zweite Fingerabdruck erhalten wird, indem die Hashfunktion auf die berechnete, mit $D1^e$ multiplizierte Zahl $(D^f)^{f'}$ angewendet wird.

5. Kryptografisches Verfahren nach einem der Ansprüche 1 bis 4, wobei die ganze Zahl a kleiner oder gleich der ganzen Zahl d gewählt wird und $b^a > 2^z$ ist, wobei z einen vorbestimmten Sicherheitsparameter bezeichnet.

6. Kryptografisches Verfahren nach einem der Ansprüche 1 bis 5, wobei die ganze Zahl u zufällig im Intervall $[0;b^a$-1] gewählt wird und die ganze Zahl v zufällig im Intervall $[0;b^d$-1] gewählt wird.

7. Rechenvorrichtung (2), erste Rechenvorrichtung genannt, die ein ganzzahliges Datenelement x hält und geheim hält, wobei die erste Rechenvorrichtung umfasst:

   - ein Erzeugungsmodul (2A), das dafür ausgelegt ist, einen RSA-Modul zu erzeugen, der mit N bezeichnet wird;
   - ein erstes Rechenmodul (2B), das dafür ausgelegt ist, eine Zahl C zu berechnen, die gleich $g^{b^a x} h1$ ist, wobei g ein Element einer Untergruppe G von $\mathbb{Z}_N$ der Ordnung $b^d$ ist, h1 ein Element einer Untergruppe H von $\mathbb{Z}_N$ der Ordnung f ist und a,b,d und f solche ganze Zahlen bezeichnen, dass b und f zueinander prim sind und das Datenelement x kleiner als d/a ist;
   - ein Sendemodul (2C), das dafür ausgelegt ist, die Zahl C an eine zweite Rechenvorrichtung zu senden, die ein ganzzahliges Datenelement y hält und geheim hält, wobei das Datenelement y kleiner als d/a ist;
   - ein Empfangsmodul (2D), das geeignet ist, von der zweiten Rechenvorrichtung wenigstens zu empfangen:

     ○ eine Zahl D, die gleich $C^{u.b^{d-a}y}(gh3)^v h2$ ist, wobei u und v zwei zufällige ganze Zahlen und h2 und h3 Elemente der Untergruppe H bezeichnen; und
     ○ einen ersten Fingerabdruck von $(gh3)^v$, der unter Verwendung einer Hashfunktion berechnet wird;

   - ein zweites Rechenmodul (2E), das dafür ausgelegt ist, eine Zahl $(D^f)^{f'}$ zu berechnen, wobei f' das Inverse von f modulo $b^d$ ist;
   - ein Gewinnungsmodul (2F), das dafür ausgelegt ist, ausgehend von der berechneten Zahl $(D^f)^{f'}$ unter Verwendung der Hashfunktion einen zweiten Fingerabdruck zu erhalten; und
   - ein Bestimmungsmodul (2G), das dafür ausgelegt ist zu bestimmen, ob x größer oder gleich y ist oder ob x kleiner als y ist, in Abhängigkeit vom Ergebnis eines Vergleichs zwischen dem ersten Fingerabdruck und dem zweiten Fingerabdruck.

8. Rechenvorrichtung (3), zweite Rechenvorrichtung genannt, die ein ganzzahliges Datenelement y hält und geheim hält, wobei die zweite Rechenvorrichtung umfasst:

- ein Empfangsmodul (3A), das geeignet ist, von einer ersten Rechenvorrichtung, die ein ganzzahliges Datenelement x hält und geheim hält, eine Zahl C zu empfangen, die gleich $g^{bax}h1$ ist, wobei $g$ ein Element einer Untergruppe G von $\mathbb{Z}_N$ der Ordnung $b^d$ ist, $h1$ ein Element einer Untergruppe H von $\mathbb{Z}_N$ der Ordnung f ist und $a,b,d$ und f solche ganze Zahlen bezeichnen, dass b und f zueinander prim sind und die Daten x und y kleiner als $d/a$ sind;
- ein Rechenmodul (3B), das dafür ausgelegt ist, wenigstens zu berechnen:

  o eine Zahl D, die gleich $C^{u.bd-ay}(gh3)^v h2$ ist, wobei u und v zwei zufällige ganze Zahlen und h2 und h3 Elemente der Untergruppe H bezeichnen; und
  o einen ersten Fingerabdruck von $(gh3)^v$, der unter Verwendung einer Hashfunktion berechnet wird;

- ein Sendemodul (3C), das dafür ausgelegt ist, an die erste Rechenvorrichtung die Zahl D und den berechneten Fingerabdruck zu senden, um der ersten Rechenvorrichtung zu ermöglichen zu bestimmen, ohne y zu kennen, ob x größer oder gleich y ist oder ob x kleiner als y ist.

9. Bestimmungsverfahren, welches dazu bestimmt ist, von einer ersten Rechenvorrichtung durchgeführt zu werden, die ein ganzzahliges Datenelement x hält und geheim hält, wobei das Bestimmungsverfahren umfasst:

- einen Schritt der Erzeugung eines RSA-Moduls, das mit N bezeichnet wird;
- einen Schritt der Berechnung einer Zahl C, die gleich $g^{bax}h1$ ist, wobei $g$ ein Element einer Untergruppe G von $\mathbb{Z}_N$ der Ordnung $b^d$ ist, $h1$ ein Element einer Untergruppe H von $\mathbb{Z}_N$ der Ordnung f ist und $a,b,d$ und $f$ solche ganze Zahlen bezeichnen, dass $b$ und $f$ zueinander prim sind und das Datenelement x kleiner als $d/a$ ist;
- einen Schritt des Sendens der Zahl C an eine zweite Rechenvorrichtung, die ein ganzzahliges Datenelement y hält und geheim hält, wobei das Datenelement y kleiner als à $d/a$ ist;
- einen Schritt des Empfangens, von der zweiten Rechenvorrichtung, wenigstens:

  o eine Zahl D, die gleich $C^{u.bd-ay}(gh3)^v h2$ ist, wobei u und v zwei zufällige ganze Zahlen und h2 und h3 Elemente der Untergruppe H bezeichnen; und
  o eines ersten Fingerabdrucks von $(gh3)^v$, der unter Verwendung einer Hashfunktion berechnet wird;

- einen Schritt der Berechnung, durch die erste Rechenvorrichtung, der Zahl $(D^f)^{f'}$, wobei $f'$ das Inverse von f modulo $b^d$ ist;
- einen Schritt des Erhaltens, durch die erste Rechenvorrichtung, ausgehend von der berechneten Zahl $(D^f)^{f'}$, eines zweiten Fingerabdrucks unter Verwendung der Hashfunktion; und
- einen Schritt der Bestimmung, durch die erste Rechenvorrichtung, ob x größer oder gleich y ist oder ob x kleiner als y ist, in Abhängigkeit vom Ergebnis eines Vergleichs zwischen dem ersten Fingerabdruck und dem zweiten Fingerabdruck.

10. Berechnungsverfahren, welches dazu bestimmt ist, von einer Rechenvorrichtung durchgeführt zu werden, zweite Rechenvorrichtung genannt, die ein ganzzahliges Datenelement y hält und geheim hält, wobei das Berechnungsverfahren umfasst:

- einen Schritt des Empfangs, von einer ersten Rechenvorrichtung, die ein ganzzahliges Datenelement x hält und geheim hält, einer Zahl C, die gleich $g^{bax}h1$ ist, wobei g ein Element einer Untergruppe G von $\mathbb{Z}_N$ der Ordnung $b^d$ ist, $h1$ ein Element einer Untergruppe H von $\mathbb{Z}_N$ der Ordnung $f$ ist und $a,b,d$ und $f$ solche ganze Zahlen bezeichnen, dass $b$ und $f$ zueinander prim sind und die Daten x und y kleiner als $d/a$ sind;
- einen Schritt der Berechnung wenigstens:

o eine Zahl D, die gleich $C^{u.b^{d-a y}}(gh3)^v h2$ ist, wobei u und v zwei zufällige ganze Zahlen und $h2$ und $h3$ Elemente der Untergruppe H bezeichnen; und

o eines Fingerabdrucks von $(gh3)^v$ , der unter Verwendung einer Hashfunktion berechnet wird;

- einen Schritt des Sendens, an die erste Rechenvorrichtung, der Zahl D und des berechneten Fingerabdrucks, um der ersten Rechenvorrichtung zu ermöglichen zu bestimmen, ohne y zu kennen, ob x größer oder gleich y ist oder ob x kleiner als y ist.

11. Computerprogramm (PROG2,PROG3), welches Anweisungen enthält, welche die Ausführung der Schritte eines Bestimmungsverfahrens nach Anspruch 9 oder eines Berechnungsverfahrens nach Anspruch 10 bewirken, wenn diese Anweisungen von einem Computer ausgeführt werden.

12. Kryptographisches System (1), welches geeignet ist, zwei ganzzahlige geheime Daten x und y zu vergleichen, und umfasst:

- eine erste Rechenvorrichtung (2) nach Anspruch 7, die das Datenelement x hält und geheim hält; und
- eine zweite Rechenvorrichtung (3) nach Anspruch 8, die das Datenelement y hält und geheim hält.

**Claims**

1. Cryptographic method for securely comparing two integer secret data x and y, held by a first computing device (2) and by a second computing device (3), respectively, said method comprising:

- a step (E10) of the first computing device generating an RSA modulus, denoted N;
- a step (E40) of the first computing device computing a number C equal to $g^{b^{ax}}h1$, where $g$ is an element of a subgroup G of $\mathbb{Z}_N$ of order $b^d$, h1 is an element of a subgroup H of $\mathbb{Z}_N$ of order $f$, and $a, b, d$ and $f$ denote integers such that b and f are mutually prime, and the data x and y are less than $d/a$;
- a step (E50, E50') of the first computing device sending the number C to the second computing device;
- a step (F20, F20') of the second computing device computing at least:

o a number D equal to $C^{u.b^{d-a y}}(gh3)^v h2$, where u and v denote two random integers, and h2 and $h3$ are elements of the subgroup H; and
o a first fingerprint (E1) of $(gh3)^v$ computed using a hash function;

- a step (F30, F30') of the second computing device sending the number D and the first fingerprint to the first computing device;
- a step (E70, E80, E70', E80') of the first computing device computing the number $(D^f)^{f'}$, where f' is the inverse of f modulo $b^d$;
- a step (E90, E90', E95') of the first computing device obtaining, based on the computed number $(D^f)^{f'}$, a second fingerprint (E2) using the hash function; and
- a step (E100, E100') of the first computing device determining that x is greater than or equal to y or that x is less than y depending on the result of a comparison between the first fingerprint and the second fingerprint.

2. Cryptographic method according to Claim 1, furthermore comprising the second computing device computing a number D1 that it sends to the first computing device and that is used thereby to obtain the second fingerprint.

3. Cryptographic method according to Claim 1, wherein:

- g is a public element;
- $h3 = 1$;
- the second fingerprint is obtained by applying the hash function to the computed number $(D^f)^{f'}$.

4. Cryptographic method according to Claim 2, wherein:

- g is an element that is kept secret by the first computing device and h3 = h4$^e$, where e is an integer that is kept secret by the first computing device and h4 denotes an element of the subgroup H;
- the first computing device sends a number $h' = g.h3$ to the second computing device, this number being used by the second computing device to compute the first fingerprint;
- the number D1 computed by the second computing device and sent to the first computing device is equal to $h4^v$; and
- the second fingerprint is obtained by applying the hash function to the computed number $(D^f)^{f'}$ multiplied by $D1^e$.

5. Cryptographic method according to any one of Claims 1 to 4, wherein the integer *a* is chosen to be less than or equal to the integer *d,* and $b^a > 2^z$, where *z* denotes a predetermined security parameter.

6. Cryptographic method according to any one of Claims 1 to 5, wherein the integer u is chosen randomly in the interval $[0; b^a\text{-}1]$ and the integer v is chosen randomly in the interval $[0; b^d\text{-}1]$.

7. Computing device (2), referred to as first computing device, holding an integer datum x and keeping it secret, said first computing device comprising:

   - a generation module (2A), configured to generate an RSA modulus, denoted N;
   - a first computing module (2B), configured to compute a number C equal to $g^{b^a x}h1$, where *g* is an element of a subgroup G of $\mathbb{Z}_N$ of order $b^d$, h1 is an element of a subgroup H of $\mathbb{Z}_N$ of order *f*, and *a, b, d* and f denote integers such that b and f are mutually prime, and the datum x is less than *d/a;*
   - a sending module (2C), configured to send the number C to a second computing device holding an integer datum y and keeping it secret, the datum y being less than *d/a;*
   - a reception module (2D), able to receive at least the following from the second computing device:

      o a number D equal to $C^{u.b^{d-a}y}(gh3)^v h2,$ where u and v denote two random integers, and *h2* and *h3* are elements of the subgroup H; and
      o a first fingerprint of $(gh3)^v$ computed using a hash function;

   - a second computing module (2E), configured to compute a number $(D^f)^{f'}$, where *f'* is the inverse of f modulo $b^d$;
   - an obtaining module (2F), configured to obtain, based on the computed number $(D^f)^{f'}$, a second fingerprint using the hash function; and
   - a determination module (2G), configured to determine that x is greater than or equal to y or that x is less than y depending on the result of a comparison between the first fingerprint and the second fingerprint.

8. Computing device (3), referred to as second computing device, holding an integer datum y and keeping it secret, said second computing device comprising:

   - a reception module (3A) able to receive, from a first computing device holding an integer datum x and keeping it secret, a number C equal to $g^{b^a x}h1$, where *g* is an element of a subgroup G of $\mathbb{Z}_N$ of order $b^d$, h1 is an element of a subgroup H of $\mathbb{Z}_N$ of order *f*, and *a, b, d* and *f* denote integers such that *b* and *f* are mutually prime, and the data x and y are less than *d/a;*
   - a computing module (3B), configured to compute at least:

      o a number D equal to $C^{u.b^{d-a}y}(gh3)^v h2,$ where u and v denote two random integers, and h2 and h3 are elements of the subgroup H; and
      o a fingerprint of $(gh3)^v$ computed using a hash function;

   - a sending module (3C), configured to send the number D and the computed fingerprint to the first computing device, so as to allow the first computing device to determine, without knowing y, whether x is greater than or equal to y or whether x is less than y.

9. Determination method, intended to be implemented by a first computing device, holding an integer datum x and keeping it secret, said determination method comprising:

   - a step of generating an RSA modulus, denoted N;

- a step of computing a number C equal to $g^{bax}h1$, where $g$ is an element of a subgroup G of $\mathbb{Z}_N$ of order $b^d$, $h1$ is an element of a subgroup H of $\mathbb{Z}_N$ of order $f$, and $a, b$, d and $f$ denote integers such that $b$ and $f$ are mutually prime, and the datum x is less than $d/a$;
- a step of sending the number C to a second computing device holding an integer datum y and keeping it secret, the datum y being less than $d/a$;
- a step of receiving at least the following from the second computing device:

  o a number D equal to $C^{u.b^{d-ay}}(gh3)^v h2$, where u and v denote two random integers, and $h2$ and $h3$ are elements of the subgroup H; and
  o a first fingerprint of $(gh3)^v$ computed using a hash function;

- a step of the first computing device computing the number $(D^f)^{f'}$, where $f'$ is the inverse of f modulo $b^d$;
- a step of the first computing device obtaining, based on the computed number $(D^f)^{f'}$, a second fingerprint using the hash function; and
- a step of the first computing device determining that x is greater than or equal to y or that x is less than y depending on the result of a comparison between the first fingerprint and the second fingerprint.

10. Computing method, intended to be implemented by a computing device referred to as second computing device, holding an integer datum y and keeping it secret, said computing method comprising:

- a step of receiving, from a first computing device holding an integer datum x and keeping it secret, a number C equal to $g^{bax}h1$, where $g$ is an element of a subgroup G of $\mathbb{Z}_N$ of order $b^d$, $h1$ is an element of a subgroup H of $\mathbb{Z}_N$ of order f, and $a, b, d$ and $f$ denote integers such that $b$ and $f$ are mutually prime, and the data x and y are less than $d/a$;
- a step of computing at least:

  o a number D equal to $C^{u.b^{d-ay}}(gh3)^v h2$, where u and v denote two random integers, and h2 and h3 are elements of the subgroup H; and
  o a fingerprint of $(gh3)^v$ computed using a hash function;

- a step of sending the number D and the computed fingerprint to the first computing device, so as to allow the first computing device to determine, without knowing y, whether x is greater than or equal to y or whether x is less than y.

11. Computer program (PROG2, PROG3) comprising instructions that cause the execution of the steps of a determination method according to Claim 9 or of a computing method according to Claim 10 when said instructions are executed by a computer.

12. Cryptographic system (1) able to compare two integer secret data x and y and comprising:

- a first computing device (2) according to Claim 7, holding the datum x and keeping it secret; and
- a second computing device (3) according to Claim 8, holding the datum y and keeping it secret.

1

3

| 2A | 2B | 2C |
|----|----|----|
| 2D | 2E | |
| 2F | 2G | 2 |

| 3A |
|----|
| 3B |
| 3C |

# FIG.1

| 4 | 5 | PROG2 | 6 |
|---|---|-------|---|
|   |   | PROG3 |   |

| 8 | 7 |
|---|---|

2,3

# FIG.2

FIG.3

FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **CARLTON et al.** Threshold Properties of Prime Power Subgroups with Application to Secure Integer Comparisons. *CT-RSA,* Mars 2018, 137-156

- Recommendation for Key Management. *NIST Special Publication,* 800-57